# EUROPÄISCHE PATENTSCHRIFT

(11) **EP 3 338 992 B1**
(45) Veröffentlichungstag und Bekanntmachung des Hinweises auf die Patenterteilung: **22.04.2020**
(21) Anmeldenummer: 17207881.8
(22) Anmeldetag: 16.12.2017
(51) Int. Cl.: B29C 45/60, B29C 44/34, B29C 45/18, B29C 45/17, B29K 105/04

(54) **VERFAHREN ZUM SPRITZGIESSEN VON KUNSTSTOFF-FORMTEILEN**
METHOD FOR INJECTION MOULDING OF PLASTIC ARTICLES
PROCÉDÉ DE MOULAGE PAR INJECTION DE PIÈCES MOULÉES EN MATIÈRE PLASTIQUE

(30) Priorität: 22.12.2016 DE 102016015310
(43) Veröffentlichungstag der Anmeldung: 27.06.2018
(73) Patentinhaber: Wittmann Battenfeld GmbH, 2542 Kottingbrunn (AT)
(72) Erfinder: Pühringer, Filipp, 2340 Mödling (AT)
(74) Vertreter: Gosdin, Michael

(56) Entgegenhaltungen:
- EP-A1- 0 068 333
- DE-A1- 2 019 522
- DE-A1- 19 521 520
- DE-A1-102011 105 772
- US-A1- 2004 012 107
- US-B1- 6 435 853

## Beschreibung

Die Erfindung betrifft ein Verfahren zum Spritzgießen von Kunststoff-Formteilen aus thermoplastischem Kunststoff, bei dem zunächst eine thermoplastische Kunststoffschmelze durch Rotation einer Schnecke um eine Achse in einem Schneckenzylinder, der eine innenliegende zylindrische Oberfläche aufweist, einer Plastifiziereinheit hergestellt wird, bei dem die thermoplastische Kunststoffschmelze dann mit einem Fluid durch Eingabe des Fluids in den Schneckenzylinder versetzt wird und bei dem das Gemisch aus thermoplastischer Kunststoffschmelze und Fluid dann in ein Spritzgießwerkzeug eingespritzt wird.

Bei gattungsgemäßen Verfahren bzw. Plastifiziereinheiten muss darauf geachtet werden, dass schmelzflüssiger Kunststoff bei bestimmten Prozessschritten sich nicht ungewollt in axiale Richtung des Schneckenzylinders bewegt. Dies gilt generell beim Spritzgießen von Formteilen und insbesondere dann, wenn die Schmelze mit Gas unter entsprechend hohem Druck versehen wird, so dass tendenziell eine Tendenz besteht, dass sich eine unerwünschte axiale Bewegung von Kunststoffschmelze innerhalb des Schneckenzylinders ergibt.

Hinlänglich bekannt ist zur Vermeidung derartiger Bewegungen von Kunststoffschmelze der Einsatz von Rückstromsperren, die zwei verfahrenstechnische Bereiche gegeneinander begrenzen und abdichten. Allerdings unterliegen Rückstromsperren einem relativ hohen Verschleiß, und sie wirken sich auch sonst mitunter ungünstig auf den Prozess aus.

Es besteht die Möglichkeit, als Ersatz einer Rückstromsperre mit einer Staustufe zu arbeiten, die den Rückfluss insbesondere während einer Schneckenstillstandsphase und hier vor allem bei einer Begasung der Schmelze minimieren soll. Während der Schneckenstillstandsphase findet somit eine Rückströmung von Schmelze nur in Form einer Druckströmung statt, die auf dem Druckunterschied zwischen verschiedenen Abschnitten der Schnecke bzw. des Schneckenzylinders beruht (z. B. begaste Schmelze: in Rückströmungsrichtung vor der Staustufe; unbegaste Schmelze: in Rückströmungsrichtung hinter der Staustufe).

Die Staustufe wird durch einen relativ engen radialen Spalt zwischen der Schnecke und der zylindrischen Innenbohrung des Schneckenzylinders gebildet, so dass unerwünschte Strömungsbewegungen behindert werden. Das Funktionsprinzip der Staustufe ist demgemäß, den Rückfluss der Schmelze zu minimieren. Bekannt ist der Einsatz eines einfachen Rings, der einen entsprechenden Strömungswiderstand erzeugt.

Eine Rotation der Schnecke im Schneckenzylinder schleppt die Schmelze lediglich in Umfangsrichtung und erhöht die Scherung im Material, was gegebenenfalls zur Absenkung der Viskosität führt. Abgesehen davon ist hierdurch jedoch keine Einflussnahme auf die Strömung in axiale Richtung des Schneckenzylinders möglich.

Die DE 20 19 522 A1 zeigt eine Plastifizierschnecke mit einer Staustufe, wobei in einen radial verdickten Bereich der Schnecke Fördernuten eingearbeitet sind. Die US 6,435,853 B1 offenbart ein gattungsgemäßes Verfahren, bei dem die Kunststoffschmelze mit einem Fluid durch Eingabe des Fluids in den Schneckenzylinder versetzt wird, wobei dann das Gemisch aus thermoplastischer Kunststoffschmelze und Fluid in ein Spritzgießwerkzeug eingespritzt wird. Eine ähnliche Lösung zeigt die DE 195 21 520 A1 sowie die DE 10 2011 105 772 A1**.**

Der Erfindung liegt daher die Aufgabe zugrunde, ein Verfahren zum Betrieb einer Plastifiziereinheit einer Kunststoffverarbeitungsmaschine, insbesondere einer Spritzgießmaschine, bereitzustellen, das ohne den Einsatz einer Rückstromsperre auskommt und es dennoch ermöglicht, einen unerwünschten Rückfluss von plastifiziertem Kunststoffmaterial zu verhindern. Weiterhin soll ein Verfahren bereitgestellt werden, mit dem geschäumte Kunststoffschmelze in einfacher Weise und in hoher und gleichbleibender Qualität hergestellt werden kann.

Die Lösung dieser Aufgabe durch die Erfindung ist dadurch gekennzeichnet, dass eine Plastifiziereinheit eingesetzt wird, deren Schnecke an mindestens einer axialen Position eine Staustufe aufweist, wobei die Staustufe als radial vorspringender Abschnitt der Schnecke ausgebildet ist, wobei zwischen dem radial außenliegenden Abschnitt der Staustufe und der innenliegenden zylindrischen Oberfläche ein radialer Spalt verbleibt, wobei in den radial außenliegenden Abschnitt der Staustufe mindestens ein Förderelement in Form einer nutförmigen Vertiefung einbracht ist, das bei Rotation der Schnecke im Schneckenzylinder eine Förderwirkung für schmelzflüssiges Kunststoffmaterial in Richtung der Achse erzeugt, wobei das Förderelement eine Einlaufnut umfasst, die in den außenliegenden Abschnitt der Staustufe eingearbeitet ist, wobei sich die Einlaufnut vom Beginn eines ersten axialen Endes der Staustufe in Richtung des anderen, zweiten axialen Endes der Staustufe erstreckt, ohne das zweite axiale Ende zu erreichen, wobei das Förderelement eine Auslaufnut umfasst, die in den außenliegenden Abschnitt der Staustufe eingearbeitet ist, wobei sich die Auslaufnut vom Beginn des zweiten axialen Endes der Staustufe in Richtung des ersten axialen Endes der Staustufe erstreckt, ohne das erste axiale Ende zu erreichen, wobei die Eingabe des Fluids in die Schmelze in Materialförderrichtung stromabwärts der Staustufe erfolgt.

In Materialförderrichtung stromabwärts kann eine Durchmischung des Schmelze-Fluid-Gemisches in einer Mischteilzone der Schnecke erfolgen.

Als Fluid kommt bevorzugt Stickstoffgas zum Einsatz.

Die Eingabe der Schmelze in das Spritzgießwerkzeug erfolgt bevorzugt über eine Nadelverschlussdüse, die zwischen dem axialen Ende der Schnecke und dem Spritzgießwerkzeug angeordnet ist. Derartige Nadelverschlussdüsen sind im Stand der Technik hinlänglich bekannt, so dass auf diese an dieser Stelle nicht näher eingegangen werden muss.

Die Kunststoffschmelze wird dabei insbesondere von der als Drei-Zonen-Schnecke ausgebildeten Schnecke über die Staustufe in Materialförderrichtung gefördert und im anschließenden Mischteil mit Fluid (Gas) vermengt.

Besonders bevorzugt ist vorgesehen, dass bei der Eingabe des Fluids dieses mit einem Differenzdruck zwischen dem Druck des Fluids und dem Druck in der Schmelze am Ort der Staustufe eingegeben wird, der auf einem vorgegebenen Wert gehalten, insbesondere geregelt, wird. Damit kann der Prozess optimiert werden, da der Druck, mit dem das Fluid eingegeben wird, an die Leistungsfähigkeit der Staustufe, wie oben erläutert, effektiv angepasst werden kann. Die Schmelzequalität kann so maximiert werden.

Die Einlaufnut und/oder die Auslaufnut können, in radiale Richtung betrachtet, eine sichelförmige oder bogenförmige Gestalt aufweisen.

Zwischen der Einlaufnut und der Auslaufnut kann ein sich in Umfangsrichtung des außenliegenden Abschnitts erstreckender Überströmbereich in den außenliegenden Abschnitt eingearbeitet sein, der einen Fließweg für schmelzflüssiges Kunststoffmaterial zwischen der Einlaufnut und der Auslaufnut bildet. Der Überströmbereich kann dabei im Bereich des ersten und des zweiten axialen Endes der Staustufe von je einem Dichtelement begrenzt werden. Die Dichtelemente können durch sich radial ersteckende Bereiche des radial außenliegenden Abschnitts der Staustufe gebildet werden, die den Überströmbereich radial überragen. Die Dichtelemente können als Bereiche des radial außenliegenden Abschnitts der Staustufe ausgebildet sein, die den äußeren Nominaldurchmesser der Staustufe aufweisen.

Eine Fortbildung sieht vor, dass mehrere Förderelemente über den Umfang des radial außenliegenden Abschnitts der Staustufe aufeinander folgend angeordnet sind, wobei vorzugsweise die Förderelemente über den Umfang äquidistant aufeinander folgend angeordnet sind.

Die Schnecke ist bevorzugt frei von einer Rückstromsperre.

Das vorgeschlagene Konzept stellt daher auf die Ausnutzung der Rotation der Schnecke zwecks Förderung von Schmelze in eine gewünschte axiale Richtung im Schneckenzylinder ab.

Während der axialen und rotatorischen Stillstandsphase der Schnecke im Schneckenzylinder wird das Rückströmen lediglich über eine Druckströmung beeinflusst. Dabei wird der Schmelzestrom derart umgelenkt, dass das Stauelement (Staustufe) zur Gänze oder teilweise in Umfangsrichtung überströmt wird. Das bedeutet, dass die Staustrecke zur Gänze oder teilweise in Umfangsrichtung orientiert ist bzw. dass die Überströmungsrichtung ausschließlich in Umfangsrichtung oder eine Kombination aus Umfangsrichtung und axialer Richtung sein kann.

Wie erläutert kommen dabei bevorzugt eine Einlaufnut, ein Strömungsspalt (Überströmbereich), eine Auslaufnut und entsprechende Dichtstege zum Einsatz, um das gewünschte Förderelement zu realisieren.

Mit der vorgeschlagenen Lösung ist es möglich, alleine durch die Rotation der Schnecke im Schneckenzylinder ohne relative axiale Bewegung eine Förderwirkung für die Schmelze zu erzeugen.

Die für die Realisierung benötigte Geometrie des Förderelements wird dabei bevorzugt durch einen Fräsvorgang in die radial außen liegende Oberfläche der Staustufe eingearbeitet.

In der Zeichnung ist ein Ausführungsbeispiel der Erfindung dargestellt. Es zeigen:
- Fig. 1: in teilweise geschnittener Seitenansicht einen Teil einer Plastifiziereinheit einer Spritzgießmaschine,
- Fig. 2: die Abwicklung eines Teils einer Staustufe der Schnecke der Plastifiziereinheit,
- Fig. 3: die Einzelheit "X" gemäß Figur 1,
- Fig. 4: einen Teil des radialen Spalts zwischen dem Schneckenzylinder und der Schnecke, gesehen in Richtung der Achse, mit Darstellung von wirksamen Geschwindigkeitsverläufen und
- Fig. 5: schematisch eine Spritzgießmaschine mit einer Plastifiziereinheit und einem Spritzgießwerkzeug, wobei das erfindungsgemäße Verfahren illustriert ist.

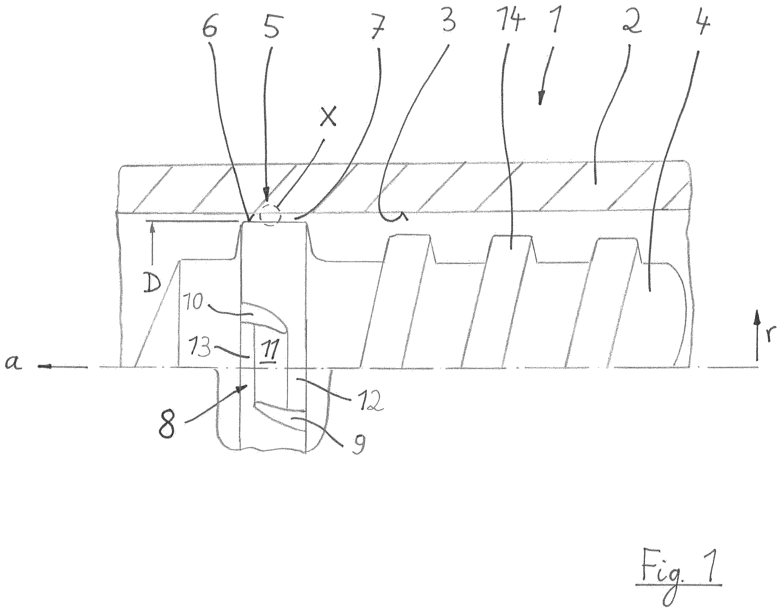

In Figur 1 ist ein Teil einer Plastifiziereinheit 1 einer Spritzgießmaschine zu sehen, die einen Schneckenzylinder 2 mit einer innenliegenden zylindrischen Oberfläche 3 aufweist; im Schneckenzylinder 2 ist eine Schnecke 4 mit Schneckenstegen 14 angeordnet. Die Achse der Plastifiziereinheit 1 ist mit a bezeichnet.

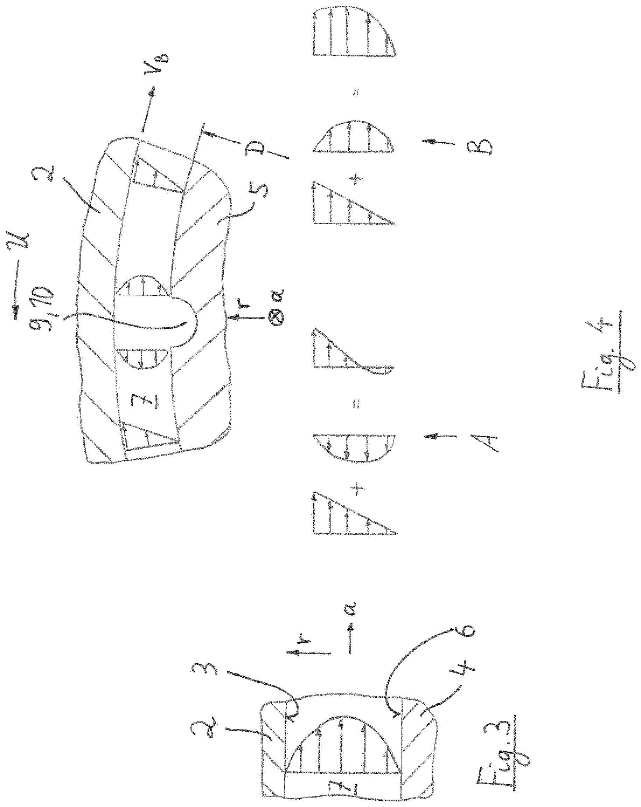

Die Schnecke 4 weist eine Staustufe 5 auf, die einen radial außenliegenden Abschnitt 6 aufweist. Wie sich insbesondere aus der Detaildarstellung "X" gemäß Figur 3 ergibt, liegt somit ein relativ enger Spalt 7 zwischen dem radial außenliegenden Abschnitts 6 und der innenliegenden zylindrischen Oberfläche 3 vor. In Figur 3 ist hierzu das sich ergebende Geschwindigkeitsprofil einer Strömung von Kunststoffschmelze angegeben, das sich ergibt, wenn zwischen den beiden axialen Endbereich in der Staustufe 5 eine Druckdifferenz besteht. Diese kann beispielsweise durch Begasung der Schmelze mit einem Gas gegeben sein. Der Druck entsteht dabei letztlich durch die Förderung durch die (Drei-Zonen-)Schnecke. Im Stillstandsfall dreht sich das Druckgefälle um und der Schmelzedruck (ob inhärent durch das Gas oder durch eine Druckregelung durch axiale Schneckenverschiebung) kann ein Rückströmen bewirken.

Bei dem dargestellten Geschwindigkeitsprofil ist zu sehen, dass es infolge von Anhaftung der Kunststoffschmelze an der Wand sowohl des Schneckenzylinders als auch der Staustufe zu einem parabolischen Verlauf kommt.

Die Staustufe 5 hat einen Nominaldurchmesser D der im Zusammenwirken mit der Oberfläche 3 die Größe des Spaltes 7 ergibt.

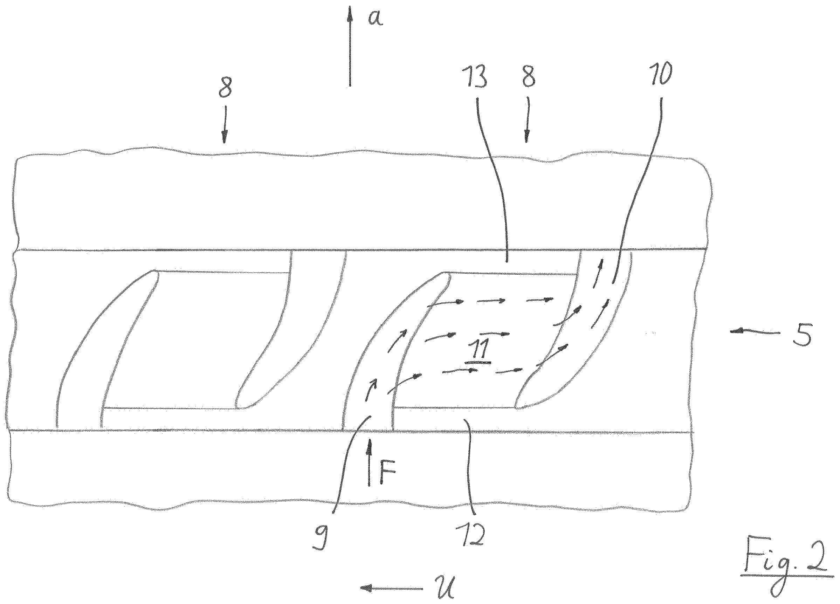

Wesentlich ist, dass in den radial außenliegenden Abschnitt 6 der Staustufe 5 mindestens ein Förderelement 8 in Form einer nutförmigen Vertiefung einbracht ist. Das Förderelement 8 erzeugt bei Rotation der Schnecke 4 im Schneckenzylinder 2 eine Förderwirkung F für schmelzflüssiges Kunststoffmaterial in Richtung der Achse a. Dies ist in Figur 2 illustriert, wo der Verlauf des Schmelzeflusses mit Pfeilen angegeben ist, wenn besagtes Förderelement 8 durch relative Rotation zwischen der Schnecke 4, d. h. der Staustufe 5, und dem Schneckenzylinder 2 wirksam ist.

Details des Förderelements 8 gehen gleichermaßen aus der Darstellung der Abwicklung gemäß Figur 2 hervor.

Hiernach weist das Förderelement 8 eine Einlaufnut 9 und eine Auslaufnut 10 auf. Beide Nuten erstrecken sich vom Beginn des jeweiligen axialen Endes der Staustufe über eine gewisse axiale Erstreckung über die Staustufe 5, jedoch ohne jeweils das andere axiale Ende zu erreichen. Zwischen den beiden Nuten 9, 10 erstreckt sich ein Überströmbereich 11. Sowohl die Nuten 9, 10 als auch der Überströmbereich 11 sind durch eine entsprechende Einfräsungen in den radial außenliegenden Abschnitt 6 der Staustufe 5 gebildet.

Die jeweils axial endseitige Abdichtung des Schmelzeflusses erfolgt durch Dichtelemente 12 und 13. Diese Dichtelemente 12, 13 werden durch nicht ausgefräste Bereiche der Staustufe 5 gebildet, d. h. sie weisen eine zylindrische Außenfläche auf, die auf dem Nominaldurchmesser D liegt.

Infolge der Gestaltung der Förderelemente 8 ergibt sich bei Rotation der Schnecke 4 im Schneckenzylinder 2 eine entsprechende Förderwirkung F, wie in Figur 2 dargestellt. Dabei sind mehrere Förderelemente 8 über den Umfang U der Staustufe 5 angeordnet, wie es aus Figur 2 ersichtlich ist.

In Figur 4 ist ein Teil des Spaltes 7 zwischen der Staustufe 5 und dem Schneckenzylinder 2 dargestellt, wobei schematisch in den Spalt 7 die Verläufe der Geschwindigkeit eingezeichnet sind, wie sie sich ergeben, wenn die Schnecke 4 als ruhend und sich relativ hierzu der Schneckenzylinder mit einer Geschwindigkeit v_{B} bewegend angenommen wird (kinematische Umkehr). Die Figur 4 zeigt im Schnitt quer zur Schneckenlängsachse die Darstellung der förderwirksamen Geschwindigkeitskomponenten.

Die resultierenden Geschwindigkeitsprofile ergeben sich durch Überlagerung des Geschwindigkeitsprofils infolge der relativen Rotation zwischen Schnecke 4 und Schneckenzylinder 2 mit den Geschwindigkeitsprofilen, die sich infolge der Druckverhältnisse ergeben und die für die beiden Enden (in Umfangsrichtung U) für die Nuten 9, 10 eingezeichnet sind.

Die Druckströmung hat in axialer bzw. azimutaler Richtung, unter Annahme eines Anhaftens des Materials an der Wand, ein parabolisches Geschwindigkeitsprofil zur Folge. Die Rotation hat in axialer Richtung zunächst (ohne die Förderelemente 8) keine förderwirksame Komponente.

Relevant ist dabei die Überströmungsrichtung. Es gibt zwei Möglichkeiten:
Im Fall "Scherung maximiert" wird die Druckströmung der Schleppströmung derart überlagert, dass das resultierende Geschwindigkeitsprofil einen maximalen Geschwindigkeitsunterschied ergibt (d. h. die Scherung ist maximiert - siehe Darstellung A in Figur 4, die die Überlagerung der Geschwindigkeitsprofile illustriert).

Im Fall "Durchsatz maximiert" ist die Druckströmung der Schleppströmung derart überlagert, dass das resultierende Geschwindigkeitsprofil eine maximale mittlere Geschwindigkeit ergibt (siehe Darstellung B in Figur 4, die wieder die Überlagerung der Geschwindigkeitsprofile illustriert). Die positive Überlagerung von Druck und Schleppströmung führt zu der gewünschten vorteilhaften Wirkung.

Das vorgeschlagene Konzept ist nicht zu verwechseln mit klassischen Scherteilen. Ein klassisches Scherteil (Maddock, Wendelscherteil, etc.) arbeitet nach Prinzip "Scherung maximiert"). Hier kommen sehr enge Scherspalte und kurze Scherwege zum Einsatz. Ziel ist hier die Zerstörung von Agglomeraten, Farbpartikeln etc.

Beim vorliegenden Konzept werden vielmehr weite Scherwege und Scherspalte eingesetzt um die Stauwirkung in der Stillstandsphase der Schnecke effektiv beeinflussen zu können. Die Länge der Scherwege ist wichtig, um die Vorteile der Schleppströmung durch Rotation ausnutzen zu können. Je länger die Scherstrecke ist, desto effektiver ist der Effekt. Aufgrund des positiven Effekts der Schleppströmung können engere Spalte realisiert werden und somit (in der Stillstandsphase) eine bessere Stauwirkung gegenüber der begasten Schmelze verwirklicht werden.

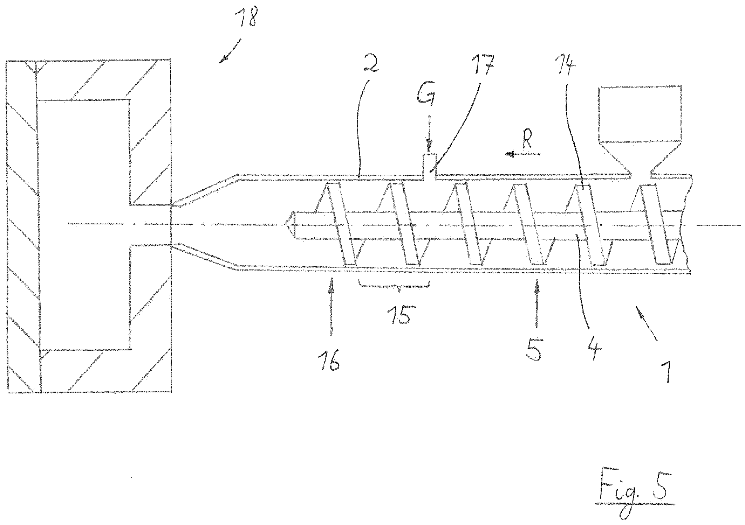

In Figur 5 ist das vorgeschlagene Verfahren illustriert. Dargestellt ist eine Spritzgießmaschine mit ihrer Plastifiziereinheit 1 und ihrem Spritzgießwerkzeug 18. Die Plastifiziereinheit 1 ist dabei so aufgebaut, wie oben erläutert. Wesentlich ist, dass sich die Staustufe 5, in Materialförderrichtung R gesehen, stromaufwärts einer axialen Position des Schneckenzylinder 2 befindet, an der über eine Gaseingabedüse 17 ein Fluid, vorliegend Stickstoffgas, eingegeben wird. In Materialförderrichtung R stromabwärts der Gaseingabestelle ist eine Mischteilzone 15 vorgesehen, an der die Mischung aus Schmelze und Gas vermischt und homogenisiert wird, um einen physikalischen Schäumungsprozess zu bewerkstelligen. Hier ist am axialen Ende der Schnecke 4 eine Rückstromsperre 16 vorgesehen. Nicht näher dargestellt ist, dass zwischen dem Ende der Schnecke 4 bzw. dem Ende des Schneckenzylinders 2 und dem Spritzgießwerkzeug 18 eine Nadelverschlussdüse vorgesehen werden kann, um die Mischung aus Schmelze und Gas ins Werkzeug einzugeben.

Weiterhin nicht dargestellt ist, dass im axialen Bereich der Staustufe 5 ein Drucksensor angeordnet werden kann, der den hier in der Schmelze herrschenden Druck erfasst. Gemäß einer bevorzugten Ausgestaltung des Verfahrens ist dann vorgesehen, dass das Fluid G mit einem solchen Druck über die Gaseingabedüse 17 in den Schneckenzylinder 2 injiziert wird, dass der Differenzdruck zwischen dem Schmelzedruck an der Stelle der Staustufe 5 und dem Einspritzdruck des Fluids konstant auf einem vorgegebenen Wert gehalten wird; hierzu kommt bevorzugt eine entsprechende Regelung zum Einsatz.

Der Abstand zwischen der Staustufe 5 und der Stelle der Eingabe des Fluids (also der Gaseingabedüse 17), gemessen in Materialförderrichtung R, liegt bevorzugt zwischen 20 cm und 150 cm, besonders bevorzugt zwischen 30 cm und 100 cm.

Somit kann die Qualität der geschäumten Schmelze konstant und auf hohem Niveau gehalten werden.

### Bezugszeichenliste:

- 1: Plastifiziereinheit
- 2: Schneckenzylinder
- 3: innenliegende zylindrische Oberfläche
- 4: Schnecke
- 5: Staustufe
- 6: radial außenliegender Abschnitt der Staustufe
- 7: Spalt
- 8: Förderelement
- 9: Einlaufnut
- 10: Auslaufnut
- 11: Überströmbereich
- 12: Dichtelement
- 13: Dichtelement
- 14: Schneckensteg
- 15: Mischteilzone
- 16: Rückstromsperre
- 17: Gaseingabedüse
- 18: Spritzgießwerkzeug

- a: Achse
- r: radiale Richtung
- U: Umfangsrichtung
- R: Materialförderrichtung
- F: Förderwirkung
- D: Nominaldurchmesser der Staustufe
- G: Gas

## Patentansprüche

1. Verfahren zum Spritzgießen von Kunststoff-Formteilen aus thermoplastischem Kunststoff, bei dem zunächst eine thermoplastische Kunststoffschmelze durch Rotation einer Schnecke (4) um eine Achse (a) in einem Schneckenzylinder (2), der eine innenliegende zylindrische Oberfläche (3) aufweist, einer Plastifiziereinheit (1) hergestellt wird, bei dem die thermoplastische Kunststoffschmelze dann mit einem Fluid (G) durch Eingabe des Fluids (G) in den Schneckenzylinder (2) versetzt wird und bei dem das Gemisch aus thermoplastischer Kunststoffschmelze und Fluid (G) dann in ein Spritzgießwerkzeug (18) eingespritzt wird, **dadurch gekennzeichnet, dass**
eine Plastifiziereinheit (1) eingesetzt wird, deren Schnecke (4) an mindestens einer axialen Position eine Staustufe (5) aufweist, wobei die Staustufe (5) als radial (r) vorspringender Abschnitt der Schnecke (4) ausgebildet ist,
wobei zwischen dem radial außenliegenden Abschnitt (6) der Staustufe (5) und der innenliegenden zylindrischen Oberfläche (3) ein radialer Spalt (7) verbleibt,
wobei in den radial außenliegenden Abschnitt (6) der Staustufe (5) mindestens ein Förderelement (8) in Form einer nutförmigen Vertiefung einbracht ist, das bei Rotation der Schnecke (4) im Schneckenzylinder (2) eine Förderwirkung (F) für schmelzflüssiges Kunststoffmaterial in Richtung der Achse (a) erzeugt,
wobei das Förderelement (8) eine Einlaufnut (9) umfasst, die in den außenliegenden Abschnitt (6) der Staustufe (5) eingearbeitet ist, wobei sich die Einlaufnut (9) vom Beginn eines ersten axialen Endes der Staustufe (5) in Richtung des anderen, zweiten axialen Endes der Staustufe (5) erstreckt, ohne das zweite axiale Ende zu erreichen,
wobei das Förderelement (8) eine Auslaufnut (10) umfasst, die in den außenliegenden Abschnitt (6) der Staustufe (5) eingearbeitet ist, wobei sich die Auslaufnut (10) vom Beginn des zweiten axialen Endes der Staustufe (5) in Richtung des ersten axialen Endes der Staustufe (5) erstreckt, ohne das erste axiale Ende zu erreichen,
wobei die Eingabe des Fluids (G) in die Schmelze in Materialförderrichtung (R) stromabwärts der Staustufe (5) erfolgt.

2. Verfahren nach Anspruch 1, **dadurch gekennzeichnet, dass** in Materialförderrichtung (R) stromabwärts eine Durchmischung des Schmelze-Fluid-Gemisches in einer Mischteilzone (15) der Schnecke (4) erfolgt.

3. Verfahren nach Anspruch 1 oder 2, **dadurch gekennzeichnet, dass** als Fluid (G) Stickstoffgas eingegeben wird.

4. Verfahren nach einem der Ansprüche 1 bis 3, **dadurch gekennzeichnet, dass** die Eingabe der Schmelze in das Spritzgießwerkzeug (18) über eine Nadelverschlussdüse erfolgt, die zwischen dem axialen Ende der Schnecke (4) und dem Spritzgießwerkzeug (18) angeordnet ist.

5. Verfahren nach einem der Ansprüche 1 bis 4, **dadurch gekennzeichnet, dass** bei der Eingabe des Fluids (G) dieses mit einem Differenzdruck zwischen dem Druck des Fluids (G) und dem Druck in der Schmelze am Ort der Staustufe (5) eingegeben wird, der auf einem vorgegebenen Wert gehalten, insbesondere geregelt, wird.

6. Verfahren nach einem der Ansprüche 1 bis 5, **dadurch gekennzeichnet, dass** die Einlaufnut (9) und/oder die Auslaufnut (10), in radiale Richtung (r) betrachtet, eine sichelförmige oder bogenförmige Gestalt aufweisen.

7. Verfahren nach einem der Ansprüche 1 bis 6, **dadurch gekennzeichnet, dass** zwischen der Einlaufnut (9) und der Auslaufnut (10) ein sich in Umfangsrichtung (U) des außenliegenden Abschnitts (6) erstreckender Überströmbereich (11) in den außenliegenden Abschnitt (6) eingearbeitet ist, der einen Fließweg für schmelzflüssiges Kunststoffmaterial zwischen der Einlaufnut (9) und der Auslaufnut (10) bildet.

8. Verfahren nach Anspruch 7, **dadurch gekennzeichnet, dass** der Überströmbereich (11) im Bereich des ersten und des zweiten axialen Endes der Staustufe (5) von je einem Dichtelement (12, 13) begrenzt wird.

9. Verfahren nach Anspruch 8, **dadurch gekennzeichnet, dass** die Dichtelemente (12, 13) durch sich radial ersteckende Bereiche des radial außenliegenden Abschnitts (6) der Staustufe (5) gebildet werden, die den Überströmbereich (11) radial überragen.

10. Verfahren nach Anspruch 8 oder 9, **dadurch gekennzeichnet, dass** die Dichtelemente (12, 13) als Bereiche des radial außenliegenden Abschnitts (6) der Staustufe (5) ausgebildet sind, die den äußeren Nominaldurchmesser (D) der Staustufe (5) aufweisen.

11. Verfahren nach einem der Ansprüche 1 bis 10, **dadurch gekennzeichnet, dass** mehrere Förderelemente (8) über den Umfang des radial außenliegenden Abschnitts (6) der Staustufe (5) aufeinander folgend angeordnet sind, wobei vorzugsweise die Förderelemente (8) über den Umfang äquidistant aufeinander folgend angeordnet sind.

12. Verfahren nach einem der Ansprüche 1 bis 11, **dadurch gekennzeichnet, dass** die Schnecke (4) frei von einer Rückstromsperre ist.

## Claims

1. Method for injection moulding of plastic moulded parts made of thermoplastic material, in which firstly a thermoplastic plastic melt is produced by rotating a screw (4) around an axis (a) in a screw cylinder (2), which has an inner cylindrical surface (3), of a plasticizing unit (1), in which the thermoplastic polymer melt is then mixed with a fluid (G) by feeding the fluid (G) into the screw cylinder (2), and in which the mixture of thermoplastic polymer melt and fluid (G) is then injected into an injection mould (18),
**characterized in that**
a plasticizing unit (1) is used, the screw (4) of which has a barrage (5) at at least one axial position, wherein the barrage (5) being designed as a radially (r) projecting section of the screw (4),
wherein a radial gap (7) remains between the radially outer portion (6) of the barrage (5) and the inner cylindrical surface (3),
wherein at least one conveying element (8) in the form of a groove-shaped recess is worked into the radially outer portion (6) of the barrage (5), which conveying element produces a conveying effect (F) for molten plastic material in the direction of the axis (a) when the screw (4) rotates in the screw cylinder (2),
wherein the conveying element (8) comprises an inlet groove (9) worked into the outer portion (6) of the barrage (5), wherein the inlet groove (9) extending from the beginning of a first axial end of the barrage (5) towards the other, second axial end of the barrage (5) without reaching the second axial end,
wherein the conveying element (8) comprises an outlet groove (10) worked into the outer portion (6) of the barrage (5), wherein the outlet groove (10) extending from the beginning of the second axial end of the barrage (5) towards the first axial end of the barrage (5) without reaching the first axial end,
wherein the fluid (G) is introduced into the melt in the material conveying direction (R) downstream of the barrage (5).

2. Method according to claim 1, **characterized in that** downstream in the material conveying direction (R) a mixing of the melt-fluid mixture takes place in a mixing zone (15) of the screw (4).

3. Method according to claim 1 or 2, **characterized in that** nitrogen gas is introduces as fluid (G).

4. Method according to one of claims 1 to 3, **characterized in that** the melt is introduced into the injection mould (18) via a needle valve nozzle which is arranged between the axial end of the screw (4) and the injection mould (18).

5. Method according to one of claims 1 to 4, **characterized in that** when the fluid (G) is introduced, it is introduced at a differential pressure between the pressure of the fluid (G) and the pressure in the melt at the location of the barrage (5), which differential pressure is maintained, in particular regulated, at a predetermined value.

6. Method according to one of claims 1 to 5, **characterized in that** the inlet groove (9) and/or the outlet groove (10), viewed in the radial direction (r), have a sickle-shaped or curved shape.

7. Method according to one of claims 1 to 6, **characterized in that** between the inlet groove (9) and the outlet groove (10) an overflow region (11) extending in the circumferential direction (U) of the outer portion (6) is worked into the outer portion (6), which forms a flow path for molten plastic material between the inlet groove (9) and the outlet groove (10).

8. Method according to claim 7, **characterized in that** the overflow region (11) in the region of the first and the second axial end of the barrage (5) is bordered by a respective sealing element (12, 13).

9. Method according to claim 8, **characterized in that** the sealing elements (12, 13) are formed by radially extending regions of the radially outer portion (6) of the barrage (5) which project radially beyond the overflow region (11).

10. Method according to claim 8 or 9, **characterized in that** the sealing elements (12, 13) are formed as regions of the radially outer portion (6) of the barrage (5) which have the outer nominal diameter (D) of the barrage (5).

11. Method according to one of claims 1 to 10, **characterized in that** a plurality of conveying elements (8) are arranged in succession over the circumference of the radially outer portion (6) of the barrage (5), wherein preferably the conveying elements (8) are arranged in succession equidistantly over the circumference.

12. Method according to one of claims 1 to 11, **characterized in that** the screw (4) is free from a non-return valve.

## Revendications

1. Procédé de moulage par injection de pièces moulées en matière thermoplastique, dans lequel une matière thermoplastique fondue est d'abord réalisée par rotation d'une vis sans fin (4) sur un axe (a) dans un cylindre à vis sans fin (2), ayant une surface cylindrique intérieure (3), d'une unité de plastification (1), dans lequel la matière thermoplastique fondue est ensuite mélangée avec un fluide (G) par introduction du fluide (G) dans le cylindre à vis sans fin (2) et dans lequel le mélange de matière thermoplastique fondue et de fluide (G) est ensuite injecté dans un moule de moulage par injection (18),
**caractérisé en ce que**
une unité de plastification (1) est utilisée dont la vis sans fin (4) comporte un étage de retenue (5) à au moins une position axiale, l'étage de retenue (5) étant conçu comme une portion radialement saillante (r) de la vis (4),
un espace radial (7) restant entre la portion radialement extérieure (6) de l'étage de retenue (5) et la surface cylindrique intérieure (3),
au moins un élément de transport (8) qui se présente sous la forme d'un évidement en forme de rainure étant ménagé dans la portion radialement extérieure (6) de l'étage de retenue (5) et générant, lorsque la vis sans fin (4) tourne dans le cylindre à vis sans fin (2), un effet de transport (F) pour la matière plastique fondue en direction de l'axe (a),
l'élément de transport (8) comprenant une rainure d'entrée (9) qui est ménagée dans la portion extérieure (6) de l'étage de retenue (5), la rainure d'entrée (9) s'étendant depuis le début d'une première extrémité axiale de l'étage de retenue (5) en direction de l'autre deuxième extrémité axiale de l'étage de retenue (5) sans atteindre la deuxième extrémité axiale, l'élément de transport (8) comprenant une rainure de sortie (10) qui est ménagée dans la portion extérieure (6) de l'étage de retenue (5), la rainure de sortie (10) s'étendant depuis le début de la deuxième extrémité axiale de l'étage de retenue (5) en direction de la première extrémité axiale de l'étage de retenue (5) sans atteindre la première extrémité axiale, l'entée du fluide (G) dans la matière fondue étant effectuée en aval de l'étage de retenue (5) dans la direction de transport de matière (R).

2. Procédé selon la revendication 1, **caractérisé en ce qu'**un malaxage du mélange fluide-matière fondue est effectué, en aval dans la direction de transport de matière (R), dans une zone de mélange (15) de la vis sans fin (4).

3. Procédé selon la revendication 1 ou 2, **caractérisé en ce que** le fluide (G) introduit est de l'azote gazeux.

4. Procédé selon l'une des revendications 1 à 3, **caractérisé en ce que** l'introduction de la matière fondue dans le moule de moulage par injection (18) est effectuée par le biais d'une buse à pointeau qui est disposée entre l'extrémité axiale de la vis sans fin (4) et le moule de moulage par injection (18).

5. Procédé selon l'une des revendications 1 à 4, **caractérisé en ce que**, lors de l'introduction du fluide (G), celui-ci est introduit avec une pression différentielle entre la pression du fluide (G) et la pression dans la matière fondue à l'emplacement de l'étage de retenue (5), laquelle pression différentielle est maintenue à une valeur prédéterminée, notamment régulée.

6. Procédé selon l'une des revendications 1 à 5, **caractérisé en ce que** la rainure d'entrée (9) et/ou la rainure de sortie (10), vues dans la direction radiale (r), ont une forme de faucille ou d'arc.

7. Procédé selon l'une des revendications 1 à 6, **caractérisé en ce qu'**une zone de trop-plein (11), s'étendant dans la direction périphérique (U) de la portion extérieure (6) entre la rainure d'entrée (9) et la rainure de sortie (10), est ménagée dans la portion extérieure (6) et forme un chemin d'écoulement de la matière plastique fondue entre la rainure d'entrée (9) et la rainure de sortie (10).

8. Procédé selon la revendication 7, **caractérisé en ce que** la zone de trop-plein (11) dans la zone de la première et de la deuxième extrémité axiale de l'étage de retenue (5) est délimitée à chaque fois par un élément d'étanchéité (12, 13).

9. Procédé selon la revendication 8, **caractérisé en ce que** les éléments d'étanchéité (12, 13) sont formés par des zones, s'étendant radialement, de la portion radialement extérieure (6) de l'étage de retenue (5) qui font saillie radialement de la zone de trop-plein (11) .

10. Procédé selon la revendication 8 ou 9, **caractérisé en ce que** les éléments d'étanchéité (12, 13) sont réalisés sous la forme de zones de la portion radialement extérieure (6) de l'étage de retenue (5) qui ont le diamètre nominal extérieur (D) de l'étage de retenue (5).

11. Procédé selon l'une des revendications 1 à 10, **caractérisé en ce que** plusieurs éléments de transport (8) sont disposés successivement sur la périphérie de la portion radialement extérieure (6) de l'étage de retenue (5), de préférence les éléments de transport (8) étant disposés successivement à égale distance les uns des autres sur la périphérie.

12. Procédé selon l'une des revendications 1 à 11, **caractérisé en ce que** la vis sans fin (4) est dépourvue de clapet anti-retour.
